# EUROPÄISCHE PATENTANMELDUNG

(11) **EP 4 560 296 A1**
(43) Veröffentlichungstag der Anmeldung: **28.05.2025**
(21) Anmeldenummer: 24210917.1
(22) Anmeldetag: 05.11.2024
(51) Int. Cl.: G01N 21/88, G01N 21/90

(54) **VERFAHREN UND VORRICHTUNG ZUR OPTISCHEN INSPEKTION VON OBJEKTEN**

(30) Priorität: 23.11.2023 DE 102023132668
(71) Anmelder: Körber Pharma Inspection GmbH, 85570 Markt Schwaben (DE)
(72) Erfinder: KWOKA, Marcin, 85661 Forstinning (DE); HALBINGER, Werner, 85586 Poing (DE)
(74) Vertreter: Laufhütte, Dieter

(57) **Zusammenfassung**

Die Erfindung betrifft ein Verfahren zur optischen Inspektion von zumindest teilweise transparenten Objekten insbesondere von pharmazeutischen Behältern, wobei ein erstes und ein zweites Bild eines zu inspizierenden Objekts aufgenommen wird, wobei hierfür das Objekt aus verschiedenen Winkeln aufgenommen und/oder beleuchtet wird, wobei sich die Bilder aufgrund des Winkelversatzes voneinander unterscheiden, wobei eine Auffälligkeit im zweiten Bild erkannt wird, wobei eine Maske basierend auf der erkannten Auffälligkeit berechnet und die Maske auf das erste Bild angewandt wird, um ein maskiertes Bild des Objekts zu erhalten, und wobei das maskierte Bild zur Erkennung von Auffälligkeiten in einem Inspektionsbereich des Objekts analysiert wird. Die Erfindung betrifft ferner eine entsprechende Inspektionsvorrichtung sowie ein Set zum Umrüsten einer bestehenden Inspektionsvorrichtung.

## Beschreibung

Die vorliegende Erfindung betrifft ein Verfahren und eine Vorrichtung zur optischen Inspektion von zumindest teilweise transparenten Objekten, insbesondere von pharmazeutischen Behältern, sowie ein Set um Umrüsten bestehender Inspektionsvorrichtungen.

Vollautomatische optische Inspektionssysteme werden in einer Vielzahl von technischen Bereichen wie beispielsweise der pharmazeutischen Industrie, der Getränkeindustrie oder auch der Halbleiterindustrie eingesetzt, um fehlerhafte Objekte zu erkennen und aus den weiteren Produktionsprozessen auszuschleusen. Gerade bei der Inspektion von pharmazeutischen Behältern wie beispielsweise Vials, Cartridges, Spritzen oder Ampullen ist eine hohe Inspektionsqualität bezüglich der Erkennung von Auffälligkeiten (z.B. Defekte oder Verunreinigungen in oder am Behälter) bei möglichst geringem Auswurf von Gutprodukten (sog. "false rejects") von hoher Wichtigkeit.

Bei der Inspektion derartiger Objekte ist es bekannt, verschiedene Bestandteile der zu inspizierenden Objekte (z.B. Stopfen, Schultern, Kuchen usw.) nacheinander an unterschiedlichen Stationen zu prüfen, wobei die Prüfverfahren und -stationen für die jeweils zu inspizierenden Teile ausgelegt sind. Dabei können Defekte und Verunreinigungen bzw. Verspritzungen (auch als "Splashes" bezeichnet) in Bereichen, die an einer bestimmten Station nicht von Interesse sind, die Inspektion des tatsächlich zu prüfenden Teils stören bzw. verfälschen.

Ein Beispiel hierfür ist die optische Inspektion von Stopfen transparenter pharmazeutischer Behälter, welche üblicherweise mit einer Standardkamera durchgeführt wird. Bei bekannten Vorrichtungen wird mittels der Kamera ein Bild der Stopfenunterseite aufgenommen, während der Behälter beispielsweise per Hintergrund- und/oder Auflicht beleuchtet wird. Da sich die transparente Seitenwand des Behälters zwischen der zu inspizierenden Stopfenunterseite und der Kamera befindet, ist es aufgrund der fehlenden Tiefeninformation nicht möglich festzustellen, ob sich eine detektierte Auffälligkeit (z.B. ein Defekt oder eine Verunreinigung) auf der Seitenwand bzw. Schulter oder dem Stopfen befindet. Somit führen alle Auffälligkeiten mit ähnlicher Größe und ähnlichem Kontrast zu einer Detektion, egal ob es sich um eine kleine externe Verunreinigung (z.B. auf der Glasaußenseite) handelt oder um eine Auffälligkeit im zu inspizierenden Bereich (hier: Stopfenunterseite). Ein ähnliches Problem ergibt sich beispielsweise bei der Inspektion einer Lyophilisat-Oberfläche im Behälter.

Vor diesem Hintergrund liegt der vorliegenden Erfindung die Aufgabe zugrunde, die Zuverlässigkeit der Inspektion derartiger Produkte zu erhöhen und die Anzahl von ausgeworfenen Gutprodukten ("false rejects") zu reduzieren.

Erfindungsgemäß wird diese Aufgabe durch ein Verfahren mit den Merkmalen des Anspruchs 1 sowie durch eine Inspektionsvorrichtung mit den Merkmalen des Anspruchs 12 gelöst. Vorteilhafte Ausführungsformen der Erfindung ergeben sich aus den Unteransprüchen und der nachfolgenden Beschreibung.

Demnach wird einerseits ein Verfahren zur optischen Inspektion von zumindest teilweise transparenten Objekten, insbesondere von pharmazeutischen Behältern wie z.B. Vials, Cartridges, Spritzen oder Ampullen, vorgeschlagen. Bei dem erfindungsgemäßen Verfahren werden ein erstes Bild und ein zweites Bild eines zu inspizierenden Objekts unter unterschiedlichen Bedingungen aufgenommen.

Die Bilder des Objekts werden dabei unter verschiedenen Winkeln, d.h. aus verschiedenen Blickrichtungen aufgenommen (Winkelversatz der Bildaufnahmen), wobei die Beleuchtung des Objekts für die unterschiedlichen Aufnahmen bzw. Bilder gleichbleiben oder sich unterscheiden kann. Alternativ oder zusätzlich hierzu wird das Objekt aus verschiedenen Winkeln beleuchtet. Vorzugsweise unterscheiden sich hierbei nicht nur die Beleuchtungswinkel (Winkelversatz der Beleuchtung), sondern auch die Eigenschaften der aus unterschiedlichen Winkeln erfolgenden Beleuchtungen des Objekts. Die Bilder können hierbei unter einem einzigen Blickwinkel oder unter verschiedenen Winkeln aufgenommen werden.

Die beiden Bilder des zu inspizierenden Objekts unterscheiden sich also aufgrund eines Winkelversatzes der Aufnahme- bzw. Blickrichtung und/oder aufgrund eines Winkelversatz der Beleuchtung. Erfindungsgemäß wird eine Auffälligkeit im zweiten Bild erkannt. Die Erkennung erfolgt vorzugsweise automatisch mittels eines geeigneten Algorithmus. Die im zweiten Bild erkannte Auffälligkeit befindet sich insbesondere in einem Kontrollbereich des Objekts.

Vorliegend wird jede Irregularität des Objekts bzw. am Objekt, d.h. jedes Merkmal, das bei einem makellosen Objekt nicht vorhanden ist, als Auffälligkeit bezeichnet. Diese Auffälligkeiten könnte daher auch als Unregelmäßigkeiten oder als Fehler bezeichnet werden. Vorliegend gelten insbesondere Defekte oder Verunreinigungen des Objekts als Auffälligkeiten. Bei einem transparenten Behälter kann ein Defekt beispielsweise ein Sprung oder Einschluss in einer Glaswand, ein Riss an einer Stopfenunterseite, eine Verunreinigung an einer Glasinnenwand (da sich dort der gelagerte Inhalt befindet) oder eine Verunreinigung am bzw. im Inhalt des Behälters sein. Eine bloße Verunreinigung kann beispielsweise eine Verspritzung bzw. ein "Splash" an einer Glasaußenwand sein.

Der Kontrollbereich zeichnet sich vorliegend dadurch aus, dass er einen Bereich des zu inspizierenden Objekts darstellt, der für die im Rahmen des erfindungsgemäßen Verfahrens erfolgende Prüfung auf Auffälligkeiten außer Betracht bleiben soll. Die eigentliche Inspektion, d.h. die Suche nach relevanten Auffälligkeiten soll sich vielmehr auf einen Inspektionsbereich des Objekts beschränken, der sich insbesondere vom Kontrollbereich unterscheidet bzw. diesen nicht überlappt. Mit anderen Worten ist das Ziel des erfindungsgemäßen Verfahrens, eine Auffälligkeit im Inspektionsbereich zu erkennen und Auffälligkeiten im Kontrollbereich nicht fälschlicherweise als Auffälligkeit im Inspektionsbereich zu interpretieren. Auffälligkeiten im Kontrollbereich, die bei der eigentlichen Inspektion die Erkennung von Auffälligkeiten im Inspektionsbereich stören würden (oder fälschlicherweise als Auffälligkeit im Inspektionsbereich erkannt würden) werden durch das erfindungsgemäße Verfahren ausmaskiert. Bei dem Inspektionsbereich kann es sich beispielsweise um die Unterseite eines Stopfens eines Vials und bei dem Kontrollbereich um die Glasseitenwand des Vials (bzw. einen Teil davon) handeln.

Hierbei ist zu betonen, dass der Kontrollbereich nur im Rahmen des erfindungsgemäßen Verfahrens nicht in die eigentliche Inspektion einbezogen werden soll. In einem vorhergehenden oder darauffolgenden Schritt kann der Kontrollbereich dagegen durchaus der zu prüfende Inspektionsbereich sein (z.B. Inspektion der Glasaußenwand oder der Schultern), während der Inspektionsbereich des vorliegenden Verfahrens dort außer Acht bleibt oder ggf. nur einen Kontrollbereich darstellt.

Erfindungsgemäß wird basierend auf der im zweiten Bild erkannten Auffälligkeit eine Maske berechnet, welche auf das erste Bild angewandt wird. Vorzugsweise besitzen das erste Bild und die erzeugte Maske, ggf. auch das zweite Bild, dasselbe Format bzw. dieselben Abmessungen (z.B. m mal n Pixel). Durch Anwendung der Maske auf das erste Bild wird ein maskiertes Bild erzeugt, welches eine maskierte Abbildung des zu inspizierenden Objekts in der Ansicht des ersten Bildes enthält.

Unter einer Maskierung bzw. Anwendung der Maske kann vorliegend beispielsweise insbesondere eine Veränderung von Pixelwerten des ersten Bildes verstanden werden, beispielsweise durch Multiplikation oder Subtraktion der Pixelwerte des ersten Bildes und der Pixelwerte der Maske, wobei alternativ oder zusätzlich auch andere Verknüpfungen wie AND oder OR denkbar sind. Die Maskierung kann im Ergebnis ein vollständiges Ausblenden (z.B. minimaler / maximaler Pixelwert) bestimmter Bildbereiche des ersten Bildes umfassen. Bei der Maske kann es sich um eine binäre Maske handeln.

Das so erhaltene maskierte Bild ist nun erfindungsgemäß Gegenstand der eigentlichen Prüfung auf das Vorliegen von Auffälligkeiten. Dementsprechend erfolgt eine Analyse des maskierten Bildes, um Auffälligkeiten wie beispielsweise Defekte oder Verunreinigungen im Inspektionsbereich des Objekts zu erkennen. Die Anwendung der Maske sorgt dabei dafür, dass Auffälligkeiten im Kontrollbereich nicht fälschlicherweise bei dieser Analyse als Auffälligkeiten im Inspektionsbereich erkannt werden. Durch das Ausmaskieren können derartige "false rejects" also zuverlässig vermieden werden. Auffälligkeiten , die sich nicht im Inspektionsbereich, sondern im Kontrollbereich befinden, werden ausmaskiert (im einfachsten Fall ganz ausgeblendet) und für die eigentliche Analyse daher nicht berücksichtigt. Möglich ist dies durch den erfindungsgemäß eingeführten Winkelversatz in der Aufnahmerichtung und/oder in der Beleuchtung des zu inspizierenden Objekts.

Vorliegend bezeichnet der Begriff "Bild" allgemein eine optische Aufnahme des Objekts mittels eines bildgebenden Verfahrens. Dies kann beispielsweise ein mittels einer Farbkamera oder einer Schwarz-Weiß-Kamera erzeugtes Lichtbild sein. Bei dem Bild handelt es sich insbesondere um ein digitales Bild, d.h. um einen Datensatz, der Bildinformationen in Form von Zahlenwerten umfasst. Allerdings kann es sich bei den Bildern prinzipiell auch um analoge Bilder handeln.

Des Weiterem beziehen sich der Kontrollbereich und Inspektionsbereich vorliegend auf Bereiche bzw. Teile des Objekts, während die Bilder optische Abbildungen der Bereiche des Objekts umfassen.

Die Beleuchtung des Objekts kann insbesondere mit sichtbarem Licht, prinzipiell jedoch auch mit elektromagnetischer Strahlung außerhalb des sichtbaren Bereichs (z.B. im Infrarot-, UV- oder Röntgenbereich) oder mit einer Kombination von Strahlung unterschiedlicher spektraler Bereiche erfolgen.

Im Falle eines Winkelversatzes der Aufnahmerichtungen kann der Winkelversatz weniger als 90° betragen, wobei prinzipiell beliebige Winkel denkbar sind, je nach Geometrie des zu inspizierenden Objekts. Vorzugsweise liegt der Winkelversatz in einer Ebene, welche auch eine Längsachse des zu inspizierenden Objekts enthält. Wird das Objekt bei der Inspektion rotiert, kann es sich bei der genannten Längsachse um die Rotationsachse handeln.

Die Erkennung von Auffälligkeiten im zweiten Bild kann mittels bekannter Objekterkennungs-Algorithmen wie beispielsweise einer Kantendetektion und/oder eines Schwellwertverfahrens erfolgen. Alternativ oder zusätzlich kann ein auf Machine Learning (insbesondere Deep Learning) basierender Algorithmus zur automatischen Erkennung von Auffälligkeiten verwendet werden.

In einer möglichen Ausführungsform ist vorgesehen, dass mindestens ein ausmaskierter Bereich des maskierten Bildes von der weiteren Analyse zur Erkennung von Auffälligkeiten ausgenommen ist. Der mindestens eine ausmaskierte Bereich liegt vorzugsweise zumindest teilweise in einer Abbildung des Inspektionsbereichs, sodass der Inspektionsbereich durch das Ausmaskieren von externen (d.h. nicht im Inspektionsbereich des Objekts liegenden) Auffälligkeiten bereinigt wird.

In einer weiteren möglichen Ausführungsform ist vorgesehen, dass die ersten und zweiten Bilder mittels einer Aufnahmeeinrichtung gleichzeitig aufgenommen werden. Die beiden Bilder können hierbei bevorzugt durch mindestens zwei separate Aufnahmeeinheiten der Aufnahmeeinrichtung erzeugt werden, insbesondere unter Verwendung eines Winkelversatzes der Aufnahmerichtungen. Dadurch ergibt sich ein besonders schnelles Inspektionsverfahren. Es können genau zwei Aufnahmeeinheiten oder auch mehr als zwei Aufnahmeeinheiten verwendet werden.

Alternativ können die ersten und zweiten Bilder bei einem Winkelversatz prinzipiell auch mittels einer einzigen Aufnahmeeinheit erzeugt werden, z.B. indem die beiden Bilder aus unterschiedlichen Blickwinkeln zeitlich hintereinander aufgenommen werden und die Aufnahmeeinheit von einer ersten Aufnahmeposition in eine zweite Aufnahmeposition bewegt wird. Auch eine Bewegung des Objekts zwischen den beiden Aufnahmen bei stationärer Aufnahmeeinheit ist denkbar. Ebenfalls ist es möglich, über entsprechende Optiken (beispielsweise durch mehrere Spiegel und/oder Prismen) mittels einer einzigen Aufnahmeeinheit die ersten und zweiten Bilder gleichzeitig aufzunehmen.

Bei einer Ausführungsvariante, bei dem kein Winkelversatz der Aufnahmerichtungen, sondern nur ein Winkelversatz der Beleuchtungen verwendet wird, um unterschiedlichen Bilder zu erzeugen, können die ersten und zweiten Bilder auch durch eine einzige Aufnahmeeinheit erzeugt werden, beispielsweise durch Verwendung einer Farbkamera mit mehreren Farbkanälen (dabei verwendet jeder Farbkanal insbesondere einen unterschiedlichen Farbfilter, um den jeweils zugeordneten Spektralbereich (z.B. rot, grün, blau, wobei natürlich auch außerhalb des optischen Bereichs liegende spektrale Bereiche wie UV oder IR möglich sind) herauszufiltern). Alternativ können die Bilder mittels einer einzigen Aufnahmeeinheit durch sequenzielle Aufnahmen unter Verwendung verschiedener Farb- und/oder Polarisationsfilter aufgenommen werden. Alternativ können mehrere separate Aufnahmeeinheiten zur Erzeugung der ersten und zweiten Bilder verwendet werden, beispielsweise in Kombination mit jeweils zugewiesenen, unterschiedlichen Farb- und/oder Polarisationsfiltern.

Bei der oder den Aufnahmeeinheiten handelt es sich insbesondere um Kameras, ggf. kombiniert mit einem oder mehreren Farb- und/oder Polarisationsfiltern. Bei der mindestens einen Kamera kann es sich beispielsweise um eine Schwarz-Weiß-Kamera oder eine Farbkamera handeln. Auch eine Kombination unterschiedlicher Kameras (z.B. eine Schwarz-Weiß-Kamera und eine Farbkamera) kann zum Einsatz kommen.

Die aus verschiedenen Winkeln erfolgenden Beleuchtungen können sich voneinander in ihren Eigenschaften (insbesondere Wellenlänge und/oder Polarisation) unterscheiden. Alternativ können auch identische Beleuchtungen verwendet werden, um die ersten und zweiten Bilder zu erzeugen, wobei die Beleuchtungen aus unterschiedlichen Winkeln hintereinander, d.h. zu unterschiedlichen Zeitpunkten erfolgt.

In einer weiteren möglichen Ausführungsform ist vorgesehen, dass der Kontrollbereich und der Inspektionsbereich unterschiedliche und sich insbesondere nicht überlappende Abschnitte des zu inspizierenden Objekts darstellen, wobei der Kontrollbereich insbesondere durch einen transparenten Abschnitt des Objekts gebildet wird, welcher in Blickrichtung des ersten Bildes vor dem Inspektionsbereich liegt. Mit anderen Worten liegt der Kontrollbereich aus Sicht der das erste Bild aufnehmenden Aufnahmeeinheit vor dem Inspektionsbereich. Aus diesem Grund sind Auffälligkeiten im Kontrollbereich als Auffälligkeiten im eigentlich interessierenden Inspektionsbereich sichtbar, was durch die Anwendung der Maske bereinigt wird.

In einer weiteren möglichen Ausführungsform ist vorgesehen, dass das erste Bild eine Abbildung des Inspektionsbereichs und eine Abbildung des Kontrollbereichs umfasst. Bei dem im ersten Bild abgebildeten Kontrollbereich kann es sich um einen Teil bzw. Ausschnitt des gesamten Kontrollbereichs des Objekts handeln (beispielsweise eine seitliche Aufnahme der Glasseitenwand eines Vials, wobei die gesamte zylindrische Glaswand, ggf. inkl. Boden und/oder Schultern, den eigentlichen Kontrollbereich darstellt). Im Folgenden wird dennoch der Einfachheit halber von einer Abbildung "des" Kontrollbereichs gesprochen. Vorzugsweise enthält das erste Bild eine Abbildung des gesamten Inspektionsbereichs (z.B. die Abbildung der gesamten Unterseite eines Stopfens, aufgenommen unter einem bestimmten Winkel).

Das zweite Bild umfasst ebenfalls eine Abbildung des Kontrollbereichs, welche sich insbesondere von derjenigen des ersten Bildes unterscheidet (insbesondere können die Abbildungen des Inspektionsbereichs unter verschiedenen Winkeln aufgenommen sein und/oder in einem Bild ist der Kontrollbereich in einer anderen Farbe dargestellt als im anderen Bild).

Dadurch, dass beide Bilder Abbildungen des Kontrollbereichs umfassen, lassen sich aus dem Winkelversatz der Aufnahmerichtungen und/oder der Beleuchtung Aussagen darüber treffen, ob eine im abgebildeten Inspektionsbereich des ersten Bildes erscheinende Auffälligkeit in Wahrheit im Kontrollbereich liegt. Insbesondere ändert sich bei einem Winkelversatz der Aufnahmerichtungen auch die Position einer Auffälligkeit im Kontrollbereich.

Bei einer Verwendung eines Winkelversatzes der Aufnahmerichtungen können die Abbildungen des Kontrollbereichs der ersten und zweiten Bilder leicht unterschiedliche Ausschnitte des tatsächlichen Kontrollbereichs des Objekts betreffen. Vorzugsweise überschneiden sich die jeweils erfassten Abschnitte des Kontrollbereichs jedoch überwiegend.

In einer weiteren möglichen Ausführungsform ist vorgesehen, dass das zu inspizierende Objekt unter verschiedenen Winkeln aufgenommen wird, wobei die Aufnahme des zweiten Bildes insbesondere unter einem solchen Winkel erfolgt, dass das zweite Bild keine Abbildung des Inspektionsbereichs enthält. Mit anderen Worten erfasst das zweite Bild nur Auffälligkeiten im Kontrollbereich (diese können auch als externe Auffälligkeiten bezeichnet werden) und somit keine Auffälligkeiten im Inspektionsbereich, da der Inspektionsbereich überhaupt nicht aufgenommen bzw. abgebildet wird. Die Aufnahmeeinheit, die das zweite Bild aufnimmt, "sieht" daher insbesondere nur den Kontrollbereich (bzw. einen Ausschnitt davon), nicht jedoch den Inspektionsbereich.

In einer weiteren möglichen Ausführungsform ist vorgesehen, dass ein transformiertes Bild aus dem zweiten Bild mittels einer Koordinatentransformation erzeugt wird. Die Transformation bringt dabei die Abbildung des Objekts des zweiten Bildes, insbesondere die Abbildung des Kontrollbereichs des zweiten Bildes, mit der Abbildung des Objekts des ersten Bildes, insbesondere mit der Abbildung des Kontrollbereichs des ersten Bildes, in eine Übereinstimmung. Mit anderen Worten wird das zweite Bild auf die Ansicht des ersten Bildes transformiert. Diese Koordinatentransformation kann optional auch eine ggf. vorhandene Verzerrung umrechnen, die sich aus dem Winkelversatz der Aufnahmerichtungen ergibt. Für die Transformation können an sich bekannte Algorithmen zur Bildregistrierung zum Einsatz kommen.

In dem Fall, dass zwei separate Aufnahmeeinheiten zur Aufnahme der beiden Bilder verwendet werden, kann optional mindestens eine der Aufnahmeeinheiten so kalibriert sein, dass sich automatsch ein flaches und/oder transformiertes Bild ergibt. Die Kalibrierung kann vor dem Inspektionsverfahren durch entsprechende Kalibrierungsmessungen durchgeführt werden, beispielsweise durch eine winkelversetzte Aufnahme eines definierten geometrischen Musters (z.B. eines Rasters aus Linien und/oder Punkten). Der Winkelversatz für die Kalibrierungsmessung entspricht dann vorzugsweise dem Winkelversatz zwischen den Aufnahmerichtungen des erfindungsgemäßen Verfahrens. Die sich im so erhaltenen Testbild ergebenen Verzerrungen des geometrischen Musters können mittels eines Algorithmus zur Kalibrierung herangezogen werden, sodass sich im kalibrierten Bild das ursprüngliche geometrische Muster bzw. ein flaches Bild ergibt. Optional kann die genannte Kalibrierung bzw. das Herausrechnen von sich aus dem Winkelversatz ergebenden Verzerrungen als Teil der zuvor genannten Transformation erfolgen.

Die Transformation kann neben dem Winkelversatz insbesondere auch von Eigenschaften des zu inspizierenden Objekts (z.B. Durchmesser, Höhe etc.) abhängen.

Für unterschiedliche zu inspizierende Objekte (z.B. Vials unterschiedlicher Größen) können unterschiedliche Transformationen (bzw. ggf. Kalibrierungen) verwendet werden. Diese können vorzugsweise als bereits vorliegende Dateien gespeichert sein und je nach Objektgeometrie herangezogen werden.

Basierend auf dem transformierten zweiten Bild wird die Maske zur Maskierung des ersten Bildes errechnet. Dabei werden insbesondere diejenigen Bildbereiche bzw. Pixel im transformierten Bild, die einer im zweiten Bild erkannten Auffälligkeit entsprechen, zur Erzeugung der Maske herangezogen. Dabei können bilden diejenigen Pixel im transformierten Bild, die mittels der Objekterkennung als Auffälligkeit im zweiten Bild erkannt wurden, in Bezug auf ihre Anordnung den Pixeln einer Bildmaske entsprechen. Im einfachsten Fall ergibt sich so eine binäre Bildmaske, bei denen die genannten transformierten Pixel der erkannten Auffälligkeit(en) ausgeblendet bzw. auf einen bestimmten Wert gesetzt werden.

Da die Maske insbesondere aus dem auf die Abbildung des ersten Bildes transformierten zweiten Bild generiert wird, kann die Maske direkt auf das erste Bild angewandt werden und die entsprechenden Bildbereiche bzw. Pixel im ersten Bild verändert (im einfachsten Fall ausgeblendet) werden.

In einer weiteren möglichen Ausführungsform ist vorgesehen, dass mehrere Paare aus ersten und zweiten Bildern des zu inspizierenden Objekts aufgenommen und analysiert werden, wobei das Objekt zwischen den Aufnahmen der Bilder-Paare bewegt, insbesondere rotiert wird. Dadurch lässt sich der Inspektionsbereich aus unterschiedlichen Richtungen und/oder ein größerer Inspektionsbereich inspizieren. Bevorzugt erfolgt eine kontinuierliche Rotation des Objekts, wobei die ersten und zweiten Bilder während der Rotation des Objekts aufgenommen werden. Alternativ kann eine diskontinuierliche, d.h. in aufeinanderfolgenden diskreten Schritten erfolgende Rotation eingesetzt werden, wobei nach einer Rotation um einen festgelegten Winkel (z.B. 90°) jeweils ein erstes und ein zweites Bild aufgenommen und die Bilder wie vorstehend beschrieben analysiert werden.

Generell kann vorgesehen sein, dass das Objekt während der Inspektion an der vorzugsweise stationären Aufnahmeeinrichtung vorbeibewegt, insbesondere translational vorbeibewegt wird. Gleichzeitig kann das Objekt rotieren, wie vorstehend beschrieben. Für diesen Fall erfolgt die Beleuchtung des Objekts bevorzugt mittels Linienlichtern, um das vorbeibewegte Objekt über eine gewisse Wegstrecke ausreichend beleuchten zu können.

In einer weiteren möglichen Ausführungsform ist vorgesehen, dass das Objekt aus verschiedenen Winkeln unterschiedlich beleuchtet wird, wobei eine erste Beleuchtung des Objekts unter einem ersten Winkel und eine zweite Beleuchtung des Objekts unter einem zweiten Winkel erfolgt. Der Winkelversatz kann mehr als 90° betragen, wobei an sich beliebige Winkel denkbar sind, je nach Geometrie des zu inspizierenden Objekts.

Die ersten und zweiten Beleuchtungen unterscheiden sich neben dem Bestrahlungswinkel vorzugsweise auch in ihrer Wellenlänge und/oder ihrer Polarisation. Letzteres kann über entsprechende Polarisationsfilter erreicht werden, die zwischen der jeweiligen Beleuchtungseinheit und dem Objekt positioniert sind. Alternativ oder zusätzlich können aus den verschiedenen Winkeln identische Beleuchtungen zu unterschiedlichen Zeitpunkten erfolgen (zeitlicher Versatz der Beleuchtung).

Die ersten und zweiten Beleuchtungen können auch von einer einzigen Beleuchtungseinheit zu unterschiedlichen Zeitpunkten ausgehen, d.h. das Objekt wird zuerst aus einer ersten Richtung beleuchtet und anschließend mit einer anderen Wellenlänge und/oder Polarisation unter einem zweiten Winkel beleuchtet. Alternativ dazu können mehrere separate Beleuchtungseinheiten vorgesehen sein, die das Objekt gleichzeitig aus unterschiedlichen Richtungen beleuchten.

In einer bevorzugten Ausführungsform können bestimmte Eigenschaften, insbesondere zumindest die Wellenlängen, der ersten und/oder der zweiten Beleuchtung gezielt verändert werden. Dadurch können die Beleuchtungseigenschaften auf das zu inspizierende Objekt angepasst werden, beispielsweise auf die Farbe einer in einem Behälter enthaltenen Flüssigkeit oder die Farbe eines zu inspizierenden Stopfens.

In einer weiteren möglichen Ausführungsform ist vorgesehen, dass durch die erste Beleuchtung der Inspektionsbereich und zumindest ein Teil des Kontrollbereichs des Objekts beleuchtet werden. Dadurch werden sowohl der entsprechende Teil des Kontrollbereichs als auch der Inspektionsbereich im ersten Bild abgebildet. Durch die zweite Beleuchtung wird dagegen zumindest ein Teil des Kontrollbereichs aber insbesondere nicht der Inspektionsbereich des Objekts beleuchtet. Wird daher im zweiten Bild nur die zweite Beleuchtung aufgenommen, ist der Inspektionsbereich im zweiten Bild nicht sichtbar (auch wenn dieser prinzipiell im Bildbereich der das zweite Bild aufnehmenden Aufnahmeeinheit liegen würde). Analog zum obigen Fall der winkelversetzten Aufnahmerichtungen wird der Inspektionsbereich im zweiten Bild daher nicht abgebildet, da dieser nicht beleuchtet wird.

In einer weiteren möglichen Ausführungsform ist vorgesehen, dass das zweite Bild eine nur durch die zweite Beleuchtung erzeugte Abbildung des Objekts umfasst, nicht dagegen eine durch die erste Beleuchtung erzeugte Abbildung des Objekts (welche auch den Inspektionsbereich erfasst). Dadurch sind im zweiten Bild nur Auffälligkeiten sichtbar, die sich im Kontrollbereich und nicht im Inspektionsbereich befinden. Werden die beiden Bilder unter winkelversetzter Beleuchtung von derselben Aufnahmerichtung aufgenommen, so kann die Maske direkt aus Bildbereichen bzw. Pixeln generiert werden, die im zweiten Bild als Auffälligkeit erkannt werden.

Bei der Aufnahmeeinheit kann es sich um eine Farbkamera handeln. In diesem Fall können die ersten und zweiten Bilder gleichzeitig mittels derselben Kamera aufgenommen werden (d.h. die unterschiedlichen Beleuchtungen erfolgen gleichzeitig mit unterschiedlichen Wellenlängen). Dadurch sind die bei der jeweiligen Beleuchtung abgebildeten Informationen in unterschiedlichen Farbkanälen (z.B. grün und rot) gespeichert bzw. durch verschiedene Farben kodiert, sodass sich das zweite Bild durch Auswahl des zugehörigen Farbkanals "erzeugen" bzw. auswählen lässt.

Die spektral unterschiedlichen Abbildungen werden bevorzugt mit Hilfe von Farbfiltern (z.B. Low-Pass, High-Pass, Band-Pass) getrennt und so die beiden Bilder erzeugt (bei der Aufnahme des zweiten Bildes wird dann die erste Beleuchtung über einen Farbfilter blockiert). Letzteres gilt auch für den Fall unterschiedlich polarisierter Beleuchtungen, deren zugehörige Abbildungen über Polarisationsfilter getrennt werden können.

Die Verwendung winkelversetzter Aufnahmerichtungen und die Verwendung winkelversetzter und sich voneinander unterscheidender Beleuchtungen kann auch miteinander kombiniert werden. Dabei werden die ersten und zweiten Bilder jeweils bei unterschiedlicher Beleuchtung und aus unterschiedlichen Blickwinkeln aufgenommen, vorzugsweise mit zwei separaten Aufnahmeeinheiten. Diese können mit entsprechenden Filtern kombiniert sein, um nur die jeweilige Beleuchtung durchzulassen.

Durch eine Kombination dieser beiden Prinzipien kann ein noch genauerer und zuverlässigerer Ausschluss von externen Auffälligkeiten erreicht werden.

Es kann vorgesehen sein, dass das Objekt mit einer dritten oder sogar mit mehr als drei unterschiedlichen Beleuchtungen beleuchtet werden kann. Hierzu kann die Inspektionsvorrichtung drei oder mehr Beleuchtungseinheiten umfassen, die das Objekt vorzugsweise allesamt aus unterschiedlichen Richtungen bzw. Winkeln beleuchten. Diese können eine Kombination aus Durchlicht und Auflichtbeleuchtungen realisieren. Das erste Bild kann dabei optional durch Beleuchtung des Objekts mit zwei oder mehr Farben gleichzeitig erzeugt werden. Alternativ oder zusätzlich kann auch das zweite Bild durch Beleuchtung des Objekts (unter einem geeigneten Winkel) mit zwei oder mehr Farben gleichzeitig erzeugt werden.

Die vorliegende Erfindung betrifft ferner eine Inspektionsvorrichtung zur optischen Inspektion von zumindest teilweise transparenten Objekten, insbesondere von pharmazeutischen Behältern, mittels des erfindungsgemäßen Verfahrens. Die erfindungsgemäße Inspektionsvorrichtung umfasst eine Aufnahmeeinrichtung zur Erzeugung eines ersten und eines zweiten Bildes eines zu inspizierenden Objekts, eine Beleuchtungseinrichtung und ein Analysemittel. Das Objekt kann mittels der Aufnahmeeinrichtung aus verschiedenen Winkeln aufgenommen und/oder mittels der Beleuchtungseinrichtung aus verschiedenen Winkeln beleuchtet werden, wie dies zuvor für das erfindungsgemäße Verfahren beschrieben wurde.

Das genannte Analysemittel ist eingerichtet, die erzeugten Bilder, die sich aufgrund des Winkelversatzes voneinander unterscheiden, zu analysieren, eine Auffälligkeit im zweiten Bild zu erkennen, basierend darauf eine Maske zu berechnen, die Maske auf das erste Bild anzuwenden und das so erhaltene maskierte Bild auf ein Vorliegen von Auffälligkeiten in einem Inspektionsbereich des Objekts hin zu analysieren, wie dies zuvor für das erfindungsgemäße Verfahren beschrieben wurde. Bei dem Analysemittel kann es sich um einen Softwarebaustein handeln, welcher von einer Rechnereinheit, insbesondere einer Rechnereinheit der Inspektionsvorrichtung, ausgeführt werden kann. Alternativ kann das Analysemittel selbst eine Rechnereinheit darstellen.

Hierbei ergeben sich offensichtlich dieselben Eigenschaften und Vorteile wie für das erfindungsgemäße Verfahren, sodass auf eine wiederholende Beschreibung weitgehend verzichtet wird. Sämtliche vorherigen Ausführungen zu möglichen Ausführungsformen des erfindungsgemäßen Verfahrens gelten auch für die erfindungsgemäße Inspektionsvorrichtung.

Die Inspektionsvorrichtung kann vorzugsweise eine Einrichtung zum Rotieren des Objekts umfassen, um das Objekt von unterschiedlichen Seiten aufnehmen und/oder beleuchten und damit inspizieren zu können. Hierbei kann das Objekt vorzugsweise kontinuierlich rotiert werden. Alternativ oder zusätzlich kann die Inspektionsvorrichtung eine Einrichtung zum translationalen Bewegen des Objekts umfassen, um das Objekt an den insbesondere stationären Aufnahme- und Beleuchtungseinrichtungen vorbeizubewegen.

In einer möglichen Ausführungsform ist vorgesehen, dass die Aufnahmeeinrichtung zwei separate Aufnahmeeinheiten, insbesondere Kameras, umfasst, mittels welchen die beiden Bilder aus unterschiedlichen Winkeln gleichzeitig aufnehmbar sind. Vorzugsweise umfasst die Inspektionsvorrichtung eine Verstelleinrichtung, mittels welcher mindestens eine Aufnahmeeinheit relativ zum Objekt bewegbar ist. Dadurch können Bilder aus unterschiedlichen Entfernungen und/oder Winkeln aufgenommen und/oder die Anordnung der Aufnahmeeinheiten an das zu inspizierende Objekt angepasst werden. Dadurch lässt sich die Inspektionsvorrichtung bei unterschiedlichen Typen und/oder Größen von Objekten flexibel einsetzen.

In einer weiteren möglichen Ausführungsform ist vorgesehen, dass die Beleuchtungseinrichtung mindestens zwei separate Beleuchtungseinheiten umfasst, mittels welchem das Objekt aus unterschiedlichen Winkeln gleichzeitig beleuchtbar ist. Insbesondere unterscheiden sich die von den Beleuchtungseinheiten erzeugten Beleuchtungen zumindest am Ort des Objekts in ihrer Wellenlänge und/oder in ihrer Polarisation voneinander. Dies kann z.B. mittels einer Anordnung von Farb- und/oder Polarisationsfiltern erreicht werden, welche ebenfalls Bestandteil der Inspektionsvorrichtung sein kann. Vorzugsweise umfasst die Inspektionsvorrichtung eine Verstelleinrichtung, mittels welcher mindestens eine Beleuchtungseinheit relativ zum Objekt bewegbar ist.

Bei mindestens einer Beleuchtungseinheit, vorzugsweise bei allen Beleuchtungseinheiten, kann es sich um LED-Leuchten handeln, die jeweils Licht in einer oder mehreren wählbaren Farben emittieren. Eine, mehrere oder alle Beleuchtungseinheiten können als Punktlicht bzw. "Spotlight", als Linienlicht oder als Flächenlicht ausgebildet sein. Auch eine Kombination von Punkt- Linien- und/oder Flächenlichtern ist denkbar. Linienlichter kommen bevorzugt zum Einsatz, wenn das zu inspizierende Objekt an der stationären Beleuchtungseinrichtung vorbeibewegt wird, um über eine längere Wegstrecke eine ausreichende Beleuchtung zu gewährleisten.

Die vorliegende Erfindung betrifft ferner ein Set zum Umrüsten einer bestehenden Inspektionsvorrichtung, welches ein Analysemittel sowie eine Aufnahmeeinrichtung und/oder eine Beleuchtungseinrichtung der vorstehend beschriebenen Inspektionsvorrichtung umfasst. Dadurch können bestehende Inspektionsvorrichtung einfach und kostengünstig umgerüstet werden, sodass sie das erfindungsgemäße Inspektionsverfahren ausführen können. Die vorherigen Ausführungen zu Ausführungsformen des erfindungsgemäßen Verfahrens bzw. der verschiedenen Komponenten der Inspektionsvorrichtung gelten auch für das erfindungsgemäße Set.

Weitere Merkmale, Einzelheiten und Vorteile der Erfindung ergeben sich aus den nachfolgend anhand der Figuren erläuterten Ausführungsbeispielen. Es zeigen:
- Figur 1:: eine schematische Seitenansicht der erfindungsgemäßen Inspektionsvorrichtung gemäß einem ersten Ausführungsbeispiel;
- Figuren 2a-c:: ein Beispiel für eine durch eine Inspektionsvorrichtung gemäß Figur 1 abgebildete Auffälligkeit im Kontrollbereich und deren Ausmaskierung;
- Figur 3:: eine schematische Seitenansicht der erfindungsgemäßen Inspektionsvorrichtung gemäß einem zweiten Ausführungsbeispiel; und
- Figuren 4a-f:: ein Beispiel für durch eine Inspektionsvorrichtung gemäß Figur 3 abgebildete Auffälligkeiten im Kontrollbereich und deren Ausmaskierung.

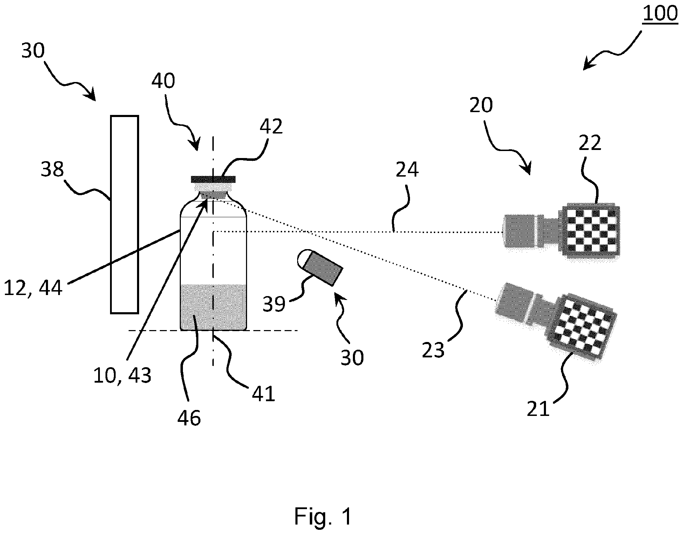

In der Figur 1 ist ein erstes Ausführungsbeispiel der erfindungsgemäßen Inspektionsvorrichtung 100 in einer schematischen Seitenansicht dargestellt. Das zu inspizierende Objekt 40 ist in dem hier gezeigten Ausführungsbeispiel ein Inspektionsfläschchen bzw. Vial 40, wobei zu betonen ist, dass das erfindungsgemäße Inspektionsverfahren bei beliebigen, zumindest teilweise transparenten Objekten wie z.B. Ampullen, Spritzen, Cartridges oder anderen Behältern zum Einsatz kommen kann.

Das Vial 40 umfasst eine transparente Seitenwand 44 mit einem Boden und einer sich zu einem Hals verengenden Schulter. Im Hals des Vials 40 sitzt ein Stopfen 42, welcher das Vial 40 verschließt. In der Figur 1 ist ein Inhalt des Vials 40 mit dem Bezugszeichen 46 gekennzeichnet (hierbei kann es sich beispielsweise um eine Flüssigkeit, ein Pulver oder Lyophilisat handeln).

Bei dem vorliegend betrachteten Ausführungsbeispiel soll eine Stopfeninspektion erfolgen, wobei die Unterseite 43 des Stopfens 42 auf Auffälligkeiten (d.h. insbesondere Defekte und Verunreinigungen) untersucht werden soll. Dies erfolgt mittels einer optischen Aufnahmeeinrichtung 20, welche in dem gezeigten Ausführungsbeispiel zwei Kameras 21, 22 umfasst, deren Aufnahme- bzw. Blickrichtungen 23, 24 einen Winkelversatz zueinander aufweisen. Dadurch werden Bilder des Vials 40 aus unterschiedlichen Blickwinkeln aufgenommen und anschließend beispielsweise von einer Rechnereinheit der Inspektionsvorrichtung 100 (nicht gezeigt) analysiert. Dabei ist eine erste Kamera 21 von schräg unten seitlich auf das Vial 40 gerichtet, sodass sie die Stopfenunterseite 43 "sieht". Ein von der ersten Kamera 21 erzeugtes erstes Bild umfasst also eine Abbildung der Stopfenunterseite 43, sodass diese auf Auffälligkeiten untersucht werden kann. Die Stopfenunterseite 43 stellt bei dieser Inspektion somit den interessierenden Inspektionsbereich 10 dar.

Bei einer derartigen optischen Inspektion ergibt sich das Problem, dass sich die transparente Glaswand 44 (in dem gezeigten Fall inklusive der Schulter) des Vials 40 zwischen der Stopfenunterseite 43 bzw. dem Inspektionsbereich 10 und der ersten Kamera 21 befindet. Eine optische Inspektion lediglich basierend auf dem Bild der ersten Kamera 21 würde aufgrund der fehlenden Tiefeninformation daher keine zuverlässige Aussage über das Vorliegen von Auffälligkeiten im Inspektionsbereich 10 liefern, da eine im ersten Bild erkannte Auffälligkeit auch an oder in der Glasseitenwand 44 liegen könnte. Die Glasseitenwand 44 des Vials 40 stellt bei der hier betrachteten Inspektion aber lediglich einen Kontrollbereich 12 dar, welcher (zumindest bei der hier betrachteten Inspektion) nicht auf Auffälligkeiten untersucht werden soll, jedoch bei der Stopfeninspektion immer mit im Sichtfeld der Aufnahmeeinrichtung 20 liegt.

Bei dem Ausführungsbeispiel der Figur 1 wird eine zuverlässige Identifizierung von im Kontrollbereich 12 liegenden Auffälligkeiten dadurch ermöglicht, dass die zweite Kamera 22 das Vial 40 unter einem versetzten Winkel betrachtet bzw. abbildet. Der Winkelversatz ist bei dem gezeigten Ausführungsbeispiel so gewählt, dass die zweite Kamera 22 die Stopfenunterseite 43 nicht "sieht", sondern lediglich den Kontrollbereich 12, d.h. die Glasseitenwand 44 abbildet. Hierzu kann die zweite Kamera 22 von der Seite (d.h. ca. 90° zur Längsachse des Vials 40) auf das Vial 40 gerichtet sein. Bei der Stopfeninspektion kann ein Winkelversatz von unter 90° zweckmäßig sein, wobei andere Winkel nicht ausgeschlossen sind. Der Winkelversatz ist darüber hinaus auch abhängig von der Art und Geometrie des zu inspizierenden Objekts zweckmäßig zu wählen und prinzipiell nicht auf bestimmte Werte beschränkt. Der genannte Winkelversatz liegt bei dem gezeigten Ausführungsbeispiel in einer Ebene, welche auch die Längs- bzw. Rotationsachse 41 des Vials 40 enthält (und nicht etwa quer zur Längs- bzw. Rotationsachse 41).

Die zweite Kamera 22 erzeugt ein zweites Bild, in welchem der Inspektionsbereich 10 daher nicht abgebildet und der Kontrollbereich 12 unter einem anderen Winkel als im ersten Bild abgebildet ist. Dadurch ändert sich auch die Position einer Auffälligkeit im Kontrollbereich 12, sodass diese als externe, d.h. nicht im Inspektionsbereich liegende Auffälligkeit identifiziert werden kann. Genauer gesagt muss es sich bei einer im zweiten Bild erkannten Auffälligkeit um eine solche externe Auffälligkeit handeln, da die zweite Kamera 22 den Inspektionsbereich 10 nicht abbildet. Dadurch kann ein "false reject" (zumindest auf Grundlage der Stopfeninspektion - an einer anderen Inspektionsstation, an der die Glasseitenwand auf Auffälligkeiten untersucht wird, kann, je nach Art der Auffälligkeit, dagegen durchaus eine positive Erkennung von Auffälligkeiten und letztendlich ein Ausschleusen des Vials 40 erfolgen).

Die Beleuchtung des Objekts 40 kann prinzipiell beliebig erfolgen. In dem gezeigten Ausführungsbeispiel kommt eine Kombination einer Durchlichtbeleuchtung, insbesondere mittels eines Flächenlichts 38, und einer Auflichtbeleuchtung, insbesondere mittels eines LED-Linienlichts 39, zum Einsatz, wobei letztere die nötige Beleuchtung für die erste Kamera 21 zur Abbildung der Stopfenunterseite 43 bereitstellt. Allerdings können auch andere Beleuchtungen zum Einsatz kommen (z.B. eine Durchlichtbeleuchtung für die Stopfenunterseite 43). Die verwendeten Beleuchtungen können prinzipiell dieselbe Farbe oder unterschiedliche Farben aufweisen.

Um die Stopfeninspektion störende Auffälligkeiten auf der Glasseitenwand 44 zu erkennen und für die Analyse des Inspektionsbereichs 10 auszuschließen, wird erfindungsgemäß eine Maske errechnet, welche auf das erste Bild der ersten Kamera 21 angewandt wird. Bei der Methode gemäß Figur 1 (3D-Ansatz bzw. Winkelversatz der Aufnahmerichtungen) wird die Maske basierend auf dem zweiten Bild errechnet, da die zweite Kamera 22 nur Auffälligkeiten im Kontrollbereich 12 erfassen kann. Die Erkennung von Auffälligkeiten im zweiten Bild kann anhand bekannter Algorithmen der Objekterkennung (z.B. Kantendetektion, Schwellwertverfahren und/oder auf Machine Learning basierende Methoden) erfolgen.

Da die errechnete Maske auf das erste Bild, welches den Inspektionsbereich 10 zeigt, angewandt werden soll, muss eine Transformation des zweiten Bildes auf die Abbildung des ersten Bildes oder umgekehrt erfolgen. Dadurch werden beispielsweise die mit der zweiten Kamera 22 aufgenommenen Auffälligkeiten in das Koordinatensystem des ersten Bildes transformiert, sodass diejenigen Bildbereiche bzw. Pixel, die zu den im zweiten Bild erkannten Auffälligkeiten gehören, im ersten Bild ausmaskiert werden können. Die Maske wird in diesem Fall aus dem transformierten zweiten Bild erzeugt. Bei der Transformation kann auch eine mögliche Verzerrung berücksichtigt werden, der sich beispielsweise durch den Winkelversatz ergibt.

Alternativ kann auch das erste Bild auf die Abbildung des zweiten Bildes transformiert werden und die Maske direkt aus dem untransformierten zweiten Bild erzeugt werden. Bei dem Beispiel der Figur 1 steht die erste Kamera 21 schräg in Bezug auf das Vial 40, sodass die Transformation auch durch eine entsprechende Kalibrierung der ersten Kamera 21 erfolgen kann, wobei die erste Kamera 21 insbesondere so kalibriert wird, dass ein flaches erstes Bild generiert wird, bei dem durch die Schrägstellung verursachte Verzerrungen ausgeglichen sind.

Die errechnete Maske wird anschließend auf das erste Bild angewandt. Dies kann eine Multiplikation, vorzugsweise jedoch eine Subtraktion von erstem Bild und Bildmaske umfassen, wobei auch logische Verknüpfungen (z.B. AND oder OR) zum Einsatz kommen können. Das so erhaltene maskierte erste Bild umfasst nun ausmaskierte Bildbereiche 60, die den Positionen der externen Auffälligkeiten 50 des Kontrollbereichs 12 entsprechen. Dieses ausmaskierte erste Bild kann anschließend in üblicher Weise (insbesondere mittels der genannten Algorithmen zur Objekterkennung) auf Auffälligkeiten analysiert werden. Auffälligkeiten , die bei dieser folgenden Analyse erkannt werden, befinden sich im Inspektionsbereich 10 und sind somit für die vorliegende Inspektion relevant.

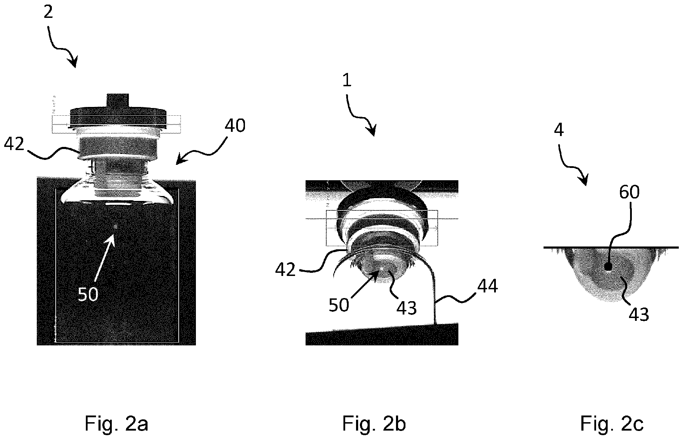

Die Figuren 2a-c zeigen Bilder eines mit einer Inspektionsvorrichtung gemäß dem Ausführungsbeispiel der Figur 1 inspizierten Vials 40 mit einer an der Glasseitenwand 44 befindlichen Auffälligkeit 50 in unterschiedlichen Ansichten. Die Figur 2a zeigt ein mit der zweiten Kamera 22 aufgenommenes Bild (= zweites Bild 2), bei dem eine Auffälligkeit 50 in der Glasseitenwand 44 als hellgrauer Punkt (siehe Pfeil) sichtbar ist. In der Figur 2b ist das entsprechende, von der ersten Kamera 21 aufgenommene erste Bild 1 gezeigt. Es ist zu erkennen, dass die externe Auffälligkeit 50 auf der Stopfenunterseite 43 und somit mitten im Inspektionsbereich 10 liegt. Allein anhand des ersten Bildes 1 würde diese Auffälligkeit 50 daher ggf. fälschlicherweise als Auffälligkeit auf der Stopfenunterseite 43 erkannt werden.

Die Figur 2c zeigt einen Ausschnitt des ausmaskierten ersten Bildes 4, wobei die Pixel, die der im zweiten Bild 2 erkannten externen Auffälligkeit 50 entsprechen, als schwarzer Bildbereich 60 ausmaskiert sind.

Wie in der Figur 1 durch die Linie 41 angedeutet ist, kann das Vial 40 optional durch eine Rotationsvorrichtung um die Längsachse 41 rotierbar sein, um erste und zweite Bilder 1, 2 von unterschiedlichen Seiten aufzunehmen.

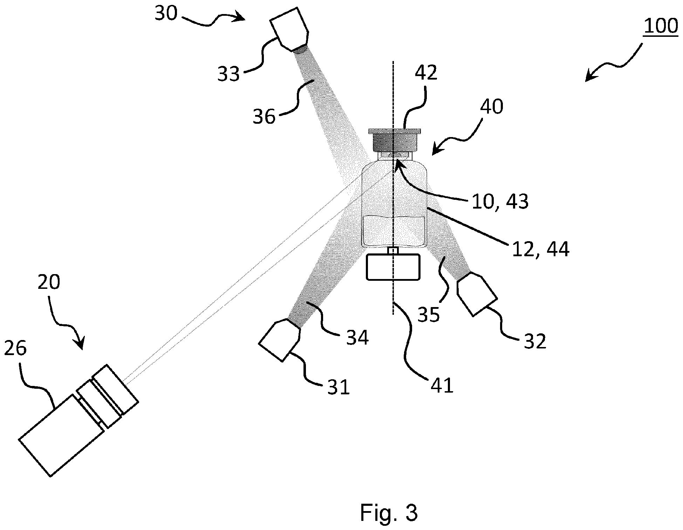

Ein zweites Ausführungsbeispiel der erfindungsgemäßen Inspektionsvorrichtung 100 ist in der Figur 3 schematisch dargestellt, wiederum anhand eines Vials 40 für die Stopfeninspektion. Das für die Erstellung der Maske herangezogene Prinzip ist hierbei nicht ein Winkelversatz der Aufnahmeeinheiten, sondern ein Winkelversatz der Beleuchtung und die Verwendung unterschiedlich kodierter Beleuchtungen 34, 35, 36. Die Aufnahmeeinrichtung 20 umfasst bei diesem Ausführungsbeispiel nur eine einzige Kamera 26, welche das Vial 40 von schräg unten aufnimmt und somit sowohl den Kontrollbereich 12 als auch den Inspektionsbereich 10 (d.h. die Stopfenunterseite 43) abbildet.

Die Beleuchtungseinrichtung 30 umfasst in diesem Ausführungsbeispiel mehrere Beleuchtungseinheiten 31, 32, 33, welche als LED-Linienlichter ausgebildet sein können. Allerdings können je nach zu inspizierendem Objekt 40 und Inspektionsverfahren andere Beleuchtungseinheiten (z.B. Flächenlichter, Punktlichter oder Kombinationen der genannten Beleuchtungseinheiten) zum Einsatz kommen.

Eine erste Beleuchtungseinheit 31 bestrahlt das Vial 40 von schräg unten in einer ersten Farbe (z.B. blau), sodass die Stopfenunterseite 43 von dieser ersten Beleuchtung 43 beleuchtet und von der Kamera 26 erfasst wird. Eine zweite Beleuchtungseinheit 33 beleuchtet das Vial 40 unter einem versetzten Winkel derart, dass die zweite Beleuchtung 36 die Stopfenunterseite 43 nicht erreicht, sondern nur die Glasseitenwand 44, d.h. den Kontrollbereich 12 trifft. Die zweite Beleuchtung 36 besitzt eine andere Farbe (z.B. grün) als die erste Beleuchtung 34.

Bei der Kamera 26 handelt es sich insbesondere um eine Farbkamera, welche mindestens zwei Sensoren und entsprechende, den jeweiligen Sensoren zugeordnete Farbfilter und Strahlteiler umfasst, sodass die Kamera 26 mindestens zwei (im gezeigten Ausführungsbeispiel drei) Bilder bzw. Farbkanäle liefert, entsprechend der Anzahl unterschiedlicher Beleuchtungen.

So können beispielsweise in einem ersten Bild 1 nur die mittels der ersten Beleuchtung 34 bestrahlten Bereiche (d.h. Kontrollbereich 12 und Inspektionsbereich 10) des Vials 40 und in einem zweiten Bild 2 nur die mittels der zweiten Beleuchtung 36 bestrahlten Bereiche (d.h. Kontrollbereich 12) des Vials 40 abgebildet sein. Der Unterschied in den Abbildungen der ersten und zweiten Bilder 1, 2 stammt also vom Winkelversatz der ersten und zweiten Beleuchtungseinheiten 31, 33 und den unterschiedlichen Farben der ersten und zweiten Beleuchtungen 34, 36. Alternativ oder zusätzlich zu einem Unterschied in den spektralen Farben können sich die Beleuchtungen 34, 36 auch in ihrer Polarisation unterscheiden, wobei hierzu entsprechende Polarisationsfilter einzusetzen wären.

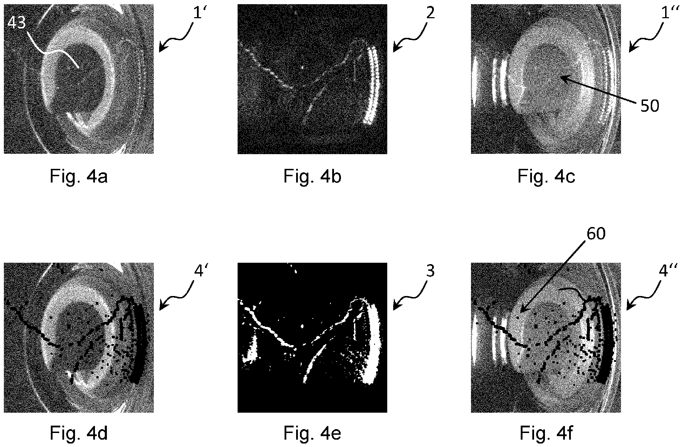

Die so erhaltenen Bilder sind in den Figuren 4a (erstes Bild 1', im genannten Beispiel der blaue Farbkanal) und 4b (zweites Bild 2, im genannten Beispiel der grüne Farbkanal) anhand eines konkreten Beispiels gezeigt. Im ersten Bild 1' ist die Stopfenunterseite 43 abgebildet, wobei im Bildfeld sich hellgrau abzeichnende Auffälligkeiten 50 zu erkennen sind (vgl. auch Fig. 4c). Diese sind im zweiten Bild 2 deutlich zu erkennen. Es handelt sich also um externe Auffälligkeiten 50 an der Glasseitenwand 44.

Bei dem in der Figur 3 gezeigten Ausführungsbeispiel ist eine dritte Beleuchtungseinheit 32 vorhanden, welche das Vial 40 von schräg unten, aber auf der der ersten Beleuchtungseinheit 31 gegenüberliegenden Seite des Vials 40 in einer dritten Farbe (z.B. rot) beleuchtet (= dritte Beleuchtung 32). Dadurch ergibt sich ein dritter Farbkanal und somit ein weiteres erstes Bild 1" (siehe Figur 4c), welches ebenfalls die Stopfenunterseite 43 zeigt. Diese weitere Beleuchtungseinheit 32 ist nicht zwingend notwendig, kann aber das Inspektionsergebnis verbessern (je nach Farbe des Stopfens 42 und des Vial-Inhalts 46 kann die gewünschte Farbe bzw. Beleuchtungseinheit 31, 32 gewählt werden; alternativ könnten die Beleuchtungseinheiten 31, 33 aber auch so ausgebildet sein, dass sie Licht mit einer einstellbaren Farbe aussenden). Die Beleuchtungen 34, 35 der ersten und dritten Beleuchtungseinheiten 31, 32 könnten auch gemeinsam als erste Beleuchtung bezeichnet werden. Selbstverständlich können mehr als drei Beleuchtungseinheiten vorhanden sein.

Alternativ oder zusätzlich könnten auch zwei oder mehr Bilder des Kontrollbereichs, d.h. mehrere zweite Bilder, mit unterschiedlichen Beleuchtungen erzeugt werden, beispielsweise um Auffälligkeiten mit unterschiedlichen Absorptionseigenschaften optimal erfassen zu können.

Anstelle einer unterschiedlichen Beleuchtung (unterschiedliche Wellenlänge und/oder Polarisation) kann auch eine identische Beleuchtung aus unterschiedlichen Winkeln, jedoch zeitversetzt erfolgen. Dadurch lassen sich die ersten und zweiten Bilder über den Zeitversatz trennen. In diesem Fall dann eine einfachere Aufnahmeeinheit, beispielsweise eine Schwarz-Weiß-Kamera bzw. eine Kamera mit einem einzigen Sensor, zum Einsatz kommen.

Bei dem hier betrachteten Prinzip (Winkelversatz der Beleuchtung) braucht keine Transformation zwischen den ersten und zweiten Bildern 1', 2 durchgeführt zu werden, da die Bilder 1', 1 ", 2 mit derselben Kamera 26 aufgenommen wurden. Somit kann die Maske direkt aus dem zweiten Bild 2 errechnet werden. Die Figur 4e zeigt die aus dem zweiten Bild erzeugte Maske als binäre Bildmaske, nachdem die im zweiten Bild 2 abgebildeten Auffälligkeiten 50 mittels Objekterkennung identifiziert wurden.

Die Figur 4d zeigt das nach Anwendung der Maske 3 auf das erste Bild 1' ausmaskierte Bild 4', welches für die weitere Suche nach Auffälligkeiten im Inspektionsbereich 10 herangezogen wird. Die Figur 4f zeigt das entsprechende ausmaskierte Bild 4" für den anderen Farbkanal (erstes Bild 1" der Fig. 4c).

Das erste Bild kann auch eine Überlagerung verschiedener Farbkanäle (im konkreten Beispiel also eine Überlagerung der Bilder 4a und 4c) darstellen.

Selbstverständlich können die Prinzipien der beiden Ausführungsbeispiele der Figuren 1 und 3 miteinander kombiniert werden, d.h. beispielsweise zwei Kameras 21, 22 mit unterschiedlichen Blickwinkeln kombiniert mit einer Beleuchtung aus unterschiedlichen Winkeln mittels unterschiedlicher Farben und/oder Polarisationen.

### Bezugszeichenliste:

- 1, 1', 1": Erstes Bild
- 2, 2', 2': Zweites Bild
- 3: Maske
- 4: Maskiertes Bild
- 10: Inspektionsbereich
- 12: Kontrollbereich
- 20: Aufnahmeeinrichtung
- 21: Erste Aufnahmeeinheit (Kamera)
- 22: Zweite Aufnahmeeinheit (Kamera)
- 23: Aufnahmerichtung der ersten Aufnahmeeinheit
- 24: Aufnahmerichtung der zweiten Aufnahmeeinheit
- 26: Aufnahmeeinheit (Kamera)
- 30: Beleuchtungseinheit
- 31: Erste Beleuchtungseinheit
- 32: Zweite Beleuchtungseinheit
- 33: Dritte Beleuchtungseinheit
- 34: Erste Beleuchtung
- 35: Zweite Beleuchtung
- 36: Dritte Beleuchtung
- 38: Beleuchtungseinheit (Flächenlicht)
- 39: Beleuchtungseinheit (Linienlicht)
- 40: Zu inspizierendes Objekt
- 41: Rotationsachse / Längsachse des Objekts
- 42: Stopfen
- 43: Stopfenunterseite
- 44: Glaswand
- 46: Inhalt
- 50: Auffälligkeit im Kontrollbereich
- 60: Ausmaskierter Bereich

## Patentansprüche

1. Verfahren zur optischen Inspektion von zumindest teilweise transparenten Objekten (40), insbesondere von pharmazeutischen Behältern, umfassend die Schritte:
- Aufnahme eines ersten und eines zweiten Bildes (1, 2) eines zu inspizierenden Objekts (40), wobei hierfür das Objekt (40) aus verschiedenen Winkeln aufgenommen und/oder beleuchtet wird und sich die Bilder (1, 2) aufgrund des Winkelversatzes voneinander unterscheiden,
- Erkennung einer Auffälligkeit (50) im zweiten Bild (2),
- Berechnung einer Maske (3) basierend auf der erkannten Auffälligkeit (50),
- Anwendung der Maske (3) auf das erste Bild (1), um ein maskiertes Bild (4) des Objekts (40) zu erhalten, und
- Analyse des maskierten Bildes (4) zur Erkennung von Auffälligkeiten in einem Inspektionsbereich (10) des Objekts (40).

2. Verfahren nach Anspruch 1, wobei mindestens ein ausmaskierter Bereich (60) des maskierten Bildes (4) von der weiteren Analyse zur Erkennung von Auffälligkeiten ausgenommen ist, wobei der ausmaskierte Bereich (60) vorzugsweise zumindest teilweise in einer Abbildung des Inspektionsbereichs (10) liegt.

3. Verfahren nach Anspruch 1 oder 2, wobei die ersten und zweiten Bilder (1, 2) mittels einer Aufnahmeeinrichtung (20) gleichzeitig aufgenommen werden, wobei die Aufnahmeeinrichtung (20) vorzugsweise mindestens zwei separate Aufnahmeeinheiten (21, 22), insbesondere Kameras, umfasst.

4. Verfahren nach einem der vorhergehenden Ansprüche, wobei der Kontrollbereich (12) und der Inspektionsbereich (10) unterschiedliche und sich vorzugsweise nicht überlappende Abschnitte des zu inspizierenden Objekts (40) darstellen, wobei der Kontrollbereich (12) insbesondere durch einen transparenten Abschnitt (44) des Objekts (40) gebildet wird, welcher in Blickrichtung (23) des ersten Bildes (1) vor dem Inspektionsbereich (10) liegt.

5. Verfahren nach einem der vorhergehenden Ansprüche, wobei das erste Bild (1) eine Abbildung des Inspektionsbereichs (10) und eine Abbildung des Kontrollbereichs (12) umfasst, wobei das zweite Bild (2) ebenfalls eine Abbildung des Kontrollbereichs (12) umfasst, welche sich insbesondere von derjenigen des ersten Bildes (1) unterscheidet.

6. Verfahren nach Anspruch 5, wobei das Objekt (40) aus verschiedenen Winkeln aufgenommen wird, wobei die Aufnahme des zweiten Bildes (2) insbesondere unter einem solchen Winkel erfolgt, dass das zweite Bild (2) keine Abbildung des Inspektionsbereichs (10) umfasst.

7. Verfahren nach einem der vorhergehenden Ansprüche, umfassend die folgenden Schritte:
- Erzeugung eines transformierten Bildes aus dem zweiten Bild (2) mittels einer Koordinatentransformation, welche die Abbildung des Objekts (40), insbesondere des Kontrollbereichs (12), des zweiten Bildes (2) mit der Abbildung des Objekts (40), insbesondere des Kontrollbereichs (12), des ersten Bildes (1) in eine Übereinstimmung bringt, und
- Berechnung der Maske (3) basierend auf dem transformierten Bild, wobei dieser Schritt vorzugsweise die Identifizierung derjenigen Bereiche im transformierten Bild, die der erkannten Auffälligkeit (50) des zweiten Bildes (2) entsprechen, umfasst.

8. Verfahren nach einem der vorhergehenden Ansprüche, wobei mehrere Paare aus ersten und zweiten Bildern (1, 2) des zu inspizierenden Objekts (40) aufgenommen und analysiert werden, wobei das Objekt (40) zwischen den Aufnahmen der Bilder-Paare (1, 2) bewegt, vorzugsweise rotiert, besonders vorzugsweise kontinuierlich rotiert wird.

9. Verfahren nach einem der vorhergehenden Ansprüche, wobei das Objekt (40) aus verschiedenen Winkeln beleuchtet wird, wobei eine erste (34, 35) Beleuchtung des Objekts (40) unter einem ersten Winkel und eine zweite Beleuchtung (36) des Objekts (40) unter einem zweiten Winkel erfolgt, wobei sich die ersten und zweiten Beleuchtungen (34, 35, 36) vorzugsweise in ihrer Wellenlänge und/oder Polarisation unterscheiden, wobei die ersten und zweiten Beleuchtungen (34, 35, 36) insbesondere von einer einzigen Beleuchtungseinheit zu unterschiedlichen Zeitpunkten oder von unterschiedlichen Beleuchtungseinheiten (31, 32, 33) gleichzeitig ausgehen.

10. Verfahren nach Anspruch 9, wobei durch die erste Beleuchtung (34, 35) der Inspektionsbereich (10) und zumindest ein Teil des Kontrollbereichs (12) des Objekts (40) beleuchtet werden und durch die zweite Beleuchtung (36) zumindest ein Teil des Kontrollbereichs (12) aber insbesondere nicht der Inspektionsbereich (10) des Objekts (40) beleuchtet wird.

11. Verfahren nach Anspruch 9 oder 10, wobei das zweite Bild (2) eine nur durch die zweite Beleuchtung (36) erzeugte Abbildung des Objekts (40) umfasst, wobei das zweite Bild (2) vorzugsweise unter Verwendung wenigstens eines die erste Beleuchtung (34, 35) blockierenden Filters erzeugt wird.

12. Inspektionsvorrichtung (100) zur optischen Inspektion von zumindest teilweise transparenten Objekten (40), insbesondere von pharmazeutischen Behältern, mittels eines Verfahrens nach einem der vorhergehenden Ansprüche, umfassend eine Aufnahmeeinrichtung (20) zur Erzeugung eines ersten und eines zweiten Bildes (1, 2) eines zu inspizierenden Objekts (40), eine Beleuchtungseinrichtung (30), ein Analysemittel und vorzugsweise eine Einrichtung zum Rotieren des Objekts (40), wobei das Objekt (40) mittels der Aufnahmeeinrichtung (20) aus verschiedenen Winkeln aufnehmbar und/oder mittels der Beleuchtungseinrichtung (30) aus verschiedenen Winkeln beleuchtbar ist, wobei das Analysemittel eingerichtet ist, die erzeugten Bilder (1, 2), welche sich aufgrund des Winkelversatzes voneinander unterscheiden, zu analysieren, eine Auffälligkeit (50) im zweiten Bild (2) zu erkennen, basierend auf der erkannten Auffälligkeit (50) eine Maske (3) zu berechnen, die Maske (3) auf das erste Bild (1) anzuwenden und das so erhaltene maskierte Bild (4) auf ein Vorliegen von Auffälligkeiten in einem Inspektionsbereich (10) des Objekts (40) hin zu analysieren.

13. Inspektionsvorrichtung (100) nach Anspruch 12, wobei die Aufnahmeeinrichtung (20) zwei separate Aufnahmeeinheiten (21, 22), insbesondere Kameras, umfasst, mittels welchen die beiden Bilder (1, 2) aus unterschiedlichen Winkeln gleichzeitig aufnehmbar sind, wobei vorzugsweise mindestens eine Aufnahmeeinheit (21, 22) mittels einer Verstelleinrichtung relativ zum Objekt (40) bewegbar ist.

14. Inspektionsvorrichtung (100) nach Anspruch 12 oder 13, wobei die Beleuchtungseinrichtung (30) mindestens zwei separate Beleuchtungseinheiten (31, 32, 33), vorzugsweise LED-Leuchten, umfasst, mittels welchen das Objekt (40) aus unterschiedlichen Winkeln gleichzeitig beleuchtbar ist, wobei sich die von den Beleuchtungseinheiten (31, 32, 33) erzeugten Beleuchtungen (34, 35, 36) am Objekt (40) insbesondere in ihrer Wellenlänge und/oder Polarisation voneinander unterscheiden, wobei vorzugsweise mindestens eine Beleuchtungseinheit (31, 32, 33) mittels einer Verstelleinrichtung relativ zum Objekt (40) bewegbar ist.

15. Set umfassend ein Analysemittel sowie eine Aufnahmeeinrichtung (20) und/oder eine Beleuchtungseinrichtung (30) einer Inspektionsvorrichtung (100) nach einem der Ansprüche 12 bis 14 zum Umrüsten einer bestehenden Inspektionsvorrichtung.
